(19) Europäisches Patentamt

European Patent Office

Office européen des brevets

(11) EP 4 783 065 A1

(12) **EUROPEAN PATENT APPLICATION**

(43) Date of publication:
29.07.2026 Bulletin 2026/31

(21) Application number: 25154089.4

(22) Date of filing: 27.01.2025

(51) International Patent Classification (IPC):
*G06K 19/07* (2006.01)    *G06K 19/077* (2006.01)

(52) Cooperative Patent Classification (CPC):
G06K 19/0726; G06K 19/07749; G06K 19/07786

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: NXP B.V.
5656 AG Eindhoven (NL)

(72) Inventors:
• Manzi,, Giuliano
5656 AG Eindhoven (NL)
• Brandl,, Roland
5656 AG Eindhoven (NL)

(74) Representative: Schwarzweller, Thomas
NXP Semiconductors Germany GmbH
Intellectual Property Group
Beiersdorfstraße 12
22529 Hamburg (DE)

(54) **A METHOD FOR OPERATING A PASSIVE RFID TAG**

(57)    A method for operating a passive radio-frequency-identification (RFID) tag comprising: an integrated-circuit (IC) picked from a region of a wafer, with an IC integrated capacitance value based on the region of the wafer. The IC comprises a variable-capacitance and a memory-device. The method comprises: a first-configuration-step comprising: receiving configuration-data, which defines a capacitance offset from a nominal value based on the region of the wafer, from the memory-device; and setting the variable-capacitance to an initially-configured capacitance value based on the configuration-data. A second-configuration-step comprising: measuring IC-response power from a received signal from an RFID reader for the initially-configured capacitance value; setting the variable-capacitance to a first-reconfigured capacitance value; measuring the IC-response power from the received signal for the first-reconfigured capacitance value; and setting the variable-capacitance as one from a list containing: the initially-configured capacitance value, and the first-reconfigured capacitance value, based on the IC-response power for each capacitance value.

Figure 2

Figure 2

EP 4 783 065 A1

**EP 4 783 065 A1**

**Description**

**Field**

The present disclosure relates to radio-frequency identification (RFID) tags. In particular, to a method for operating a passive RFID tag.

**Summary**

According to a first aspect of the present disclosure there is provided a method for operating a passive radio-frequency identification, RFID, tag, the passive RFID tag comprising: an integrated circuit, IC, wherein the IC was picked from a region of a wafer, and wherein an integrated capacitance value of the IC is based on the region of the wafer from which the IC was picked, the IC comprising a variable capacitance; and a memory device;
the method comprising: a first configuration step comprising: receiving configuration data from the memory device, wherein the configuration data defines a capacitance offset from a nominal capacitance value, wherein the capacitance offset is based on the region of the wafer from which the IC was picked; and setting the capacitance of the variable capacitance to an initially configured capacitance value based on the configuration data; and a second configuration step comprising: measuring input power at the IC in response to a received signal from an RFID reader for the initially configured capacitance value; setting the capacitance of the variable capacitance, such that the variable capacitance has a first reconfigured capacitance value; measuring the input power at the IC in response to the received signal from the RFID reader for the first reconfigured capacitance value; setting the capacitance of the variable capacitance as one from a list containing: the initially configured capacitance value, and the first reconfigured capacitance value, based on the measured input power for each capacitance value.

In one or more embodiments the second configuration step further comprises setting the capacitance of the variable capacitance such that the variable capacitance has one or more subsequent reconfigured capacitance values.

In one or more embodiments the second configuration step further comprises measuring the input power at the IC in response to the received signal from the RFID reader for each of the one or more subsequent reconfigured capacitance values.

In one or more embodiments the list further comprises the one or more subsequent reconfigured capacitance values.

In one or more embodiments, setting the capacitance of the variable capacitance, such that the variable capacitance has a first reconfigured capacitance value comprises changing the capacitance of the variable capacitance by a predetermined amount in a first direction.

In one or more embodiments, setting the capacitance of the variable capacitance as one of: the initially configured capacitance value, and the first reconfigured capacitance value, based on the measured input power for each capacitance value comprises comparing the input power level for the initially configured capacitance value with the input power level for the first reconfigured capacitance value.

In one or more embodiments, if the input power level for the first reconfigured capacitance value is greater than the input power level for the initially configured capacitance value; then setting the capacitance of the variable capacitance as one of: the initially configured capacitance value, and the first reconfigured capacitance value, based on the measured input power for each capacitance value further comprises maintaining the capacitance value of the variable capacitance as the first reconfigured capacitance value.

In one or more embodiments, setting the capacitance of the variable capacitance as one of: the initially configured capacitance value, and the first reconfigured capacitance value, based on the measured input power for each capacitance value further comprises: if the input power for the first reconfigured capacitance is not greater than the input power level for the initially configured capacitance; then setting the capacitance value of the variable capacitance as the initially configured capacitance value.

In one or more embodiments the second configuration step further comprises: if the input power for the first reconfigured capacitance value is not greater than the input power level for the initially configured capacitance value; then changing the capacitance of the variable capacitance by the predetermined amount in a second direction, such that the variable capacitance has a second reconfigured capacitance value, wherein the second direction is opposite the first direction; measuring the input power at the IC in response to the received signal from the RFID reader for the second reconfigured capacitance value; and the list further comprises: the second reconfigured capacitance value.

In one or more embodiments, setting the capacitance of the variable capacitance as one of: the initially configured capacitance value, and the second reconfigured capacitance value, based on the measured input power for each capacitance value comprises: comparing the input power level for the second reconfigured capacitance value with the input power level for the initially configured capacitance value.

In one or more embodiments, if the input power level for the second reconfigured capacitance value is greater than the input power level for the initially configured capacitance value; then setting the capacitance of the variable capacitance as one of: the initially configured capacitance value, and the second reconfigured capacitance value, based on the measured input power for each capacitance value comprises maintaining the capacitance value of the variable capacitance as the second reconfigured capacitance value.

In one or more embodiments, if the input power level for the second reconfigured capacitance is not greater than the input power level for the initially configured capacitance; then setting the capacitance of the variable capacitance as one of: the initially configured capacitance value, and the second reconfigured capacitance value, based on the measured input power for each capacitance value further comprises: setting the capacitance value of the variable capacitance as the initially configured capacitance value.

In one or more embodiments, after maintaining the capacitance value of the variable capacitance as the first reconfigured capacitance value: the method further comprises repeating the second configuration step using the first reconfigured capacitance value as the initially configured capacitance value.

In one or more embodiments, after maintaining the capacitance value of the variable capacitance as the second reconfigured capacitance value: the method further comprises repeating the second configuration step, wherein the initially configured capacitance value is the second reconfigured capacitance value.

In one or more embodiments, repeating the second configuration step comprises changing the capacitance of the variable capacitance by a second predetermined amount in either the first or second direction, wherein the second predetermined amount is different to the predetermined amount.

In one or more embodiments, the first direction is a positive direction, such that the first reconfigured capacitance value is greater than the initially configured capacitance value.

In one or more embodiments, the first configuration step is completed before each power-on-reset, POR, of the RFID circuit.

In one or more embodiments the second configuration step is completed before each power-on-reset, POR, of the RFID circuit.

In one or more embodiments the method further comprises updating the configuration data such that the configuration data defines an updated capacitance offset from the nominal capacitance.

In one or more embodiments, the updated capacitance offset is based on the capacitance of the variable capacitance at the end of the second configuration step.

In one or more embodiments the variable capacitance comprises a first variable capacitance bank and a second variable capacitance bank.

In one or more embodiments setting the capacitance of the variable capacitance to an initially configured capacitance value based on the configuration data comprises: setting the capacitance of the first variable capacitance bank.

In one or more embodiments setting the capacitance of the variable capacitance, such that the variable capacitance has a first reconfigured capacitance value comprises: changing the capacitance of the second variable capacitance bank by a predetermined amount in a first direction.

In one or more embodiments, changing the capacitance of the variable capacitance by a predetermined amount in a second direction, such that the variable capacitance has a second reconfigured capacitance value comprises: changing the capacitance of the second variable capacitance bank by a predetermined amount in the second direction.

In one or more embodiments, changing the capacitance of the variable capacitance by a second predetermined amount in either the first or second direction, wherein the second predetermined amount is different to the predetermined amount comprises: changing the capacitance of the second variable capacitance bank by a second predetermined amount in either the first or second direction, such that the variable capacitance has a third reconfigured capacitance value.

According to a further aspect of the present disclosure there is provided a passive radio-frequency identification, RFID, tag comprising: an integrated circuit, IC, wherein the IC was picked from a region of a wafer, and wherein an integrated capacitance value of the IC is based on the region of the wafer from which the IC was picked, the IC comprising a variable capacitance; and a memory device; and a processor, wherein the processor is configured to: perform a first configuration step, wherein the processor is configured to: receive configuration data from the memory device, wherein the configuration data defines a capacitance offset from a nominal capacitance value, wherein the capacitance offset is based on the region of the wafer from which the IC was picked; set the capacitance of the variable capacitance to an initially-configured capacitance value based on the configuration data; and perform a second configuration step, wherein the processor is configured to: measure input power at the IC in response to a received signal from an RFID reader for the initially configured capacitance value; set the capacitance of the variable capacitance, such that the variable capacitance has a first reconfigured capacitance value; measure the input power at the IC in response to the received signal from the RFID reader for the first reconfigured capacitance value; and set the capacitance of the variable capacitance as one from a list containing: the initially configured capacitance value, and the first reconfigured capacitance value, based on the measured input power for each capacitance value.

In one or more embodiments the memory device comprises one or more fuses configured to store the configuration data.

In one or more embodiments setting the capacitance of the variable capacitance as one from the list, based on the measured input power for each capacitance value comprises: comparing the input power level for each capacitance value within the list with the input power level for each other capacitance value within the list; and setting or maintaining the capacitance of the variable capacitance as the one from the list with the greatest input power.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

## Brief Description of the Drawings

One or more embodiments will now be described by way of example only with reference to the accompanying drawings in which:

Figure 1a shows a method for operating a passive RFID tag according to an embodiment of the present disclosure;
Figure 1b shows an example embodiment of the second configuration step of Figure 1a;
Figure 2 shows a timing diagram of the operation of an RFID tag according to an embodiment of the present disclosure, from the moment the RFID tag receives an RF signal from an RFID reader, until power-on reset;
Figure 3 shows a typical example wafer and example capacitance values for ICs picked from various positions within a cross section of the wafer;
Figure 4 shows example plots of the minimum input power required to activate two RFID ICs, from different regions of a wafer, at different frequencies;
Figure 5 shows example plots of the minimum input power required to activate the same two RFID ICs at different frequencies, after applying the method according to the present disclosure;
Figure 6 shows an example passive RFID tag in accordance with embodiments of the present disclosure;
Figure 7 shows a typical equivalent passive RFID IC system circuital model; and
Figure 8 shows a passive RFID IC system circuital model of a passive RFID tag according to an embodiment of the present disclosure.

## Detailed Description

Input impedance is a key parameter for system matching and power harvesting efficiency for a radio-frequency identification (RFID) tag, in particular for a passive RFID tag. Therefore, the input impedance directly impacts the performance of the RFID tag.

A variation of the input impedance between a plurality of RFID tags leads to a variation in the performance of the tags within the RFID system (for example, a system including an RFID reader and a plurality of RFID tags). A variation in performance of tags within an RFID system can impact the normal functioning of the RFID system because the tags may behave unexpectedly, for example an over-sensitive tag transmitting a response at the wrong time, or an under-sensitive tag failing to respond appropriately. The input power of a passive RFID tag in response to a received signal from an RFID reader is representative of the performance of the passive RFID tag.

Therefore, it is important to minimise the performance variation within an RFID system in order for the system to operate as intended. This is especially true for ultra-high frequency (UHF) RFID applications. The following disclosure explains a method for operating a passive RFID tag which provides a number of advantages as will be discussed later.

The following disclosure includes a method for operating a passive RFID tag which includes an IC and a memory device. In turn, the IC includes a variable capacitance. The method described below includes a first configuration step and a second configuration step that together can be used to set the value of the variable capacitance to set the input impedance of the RFID tag at a level that reduces the variation in performance of RFID tags in a system.

Radio-frequency (RF) input impedance measured over a wafer often shows a strong dependency on the wafer location. That is, the RF input impedance measured for an integrated circuit (IC) which has been picked from a region of a wafer often varies depending on the region of the wafer from which the IC was picked. For the purposes of this disclosure, "picking" refers to the process by which an IC is extracted from a wafer on which it has been fabricated. As discussed above, the variation of input impedance has a strong impact on overall RFID tag performances (for example, a variation of 5% in the input **impedance** may have a degradation of up to 3dB in the performance of the final RFID assembly).

The RFID IC RF input impedance is a complex value which is non-linear with power. Typically, the input impedance has a highly reactive value that can be expressed in the form of: $Z_{in} = R - jX;$ wherein $Z_{in}$ is the input impedance, R and X are positive numbers, and $j$ is the imaginary unit (i.e., $j = \sqrt{-1}$). This equation may be represented in circuit form as a resistor connected in parallel with a capacitor. The IC capacitance value $C\_(IC\_RF)$ is often very sensitive to process and may vary significantly over the wafer, whereas the resistance value $R\_(IC\_RF)$ is typically more stable over the wafer. Accounting for these variations can result in an RFID system with a limited variation in performance, and a greater manufacturing yield from the wafer.

Within an RFID system, further variation can be introduced to the RFID tags as a result of implementation or environmental factors. For example, an RFID tag which is attached to paper may have different boundary conditions to an RFID tag which is attached to cotton, thereby introducing a performance variation. In another example, the positions of RFID tags within an RFID system may result in different RFID tags being at different temperatures, which can also lead to a variation in performance between RFID tags. Accounting for these variations can also result in an RFID system with a limited variation in performance.

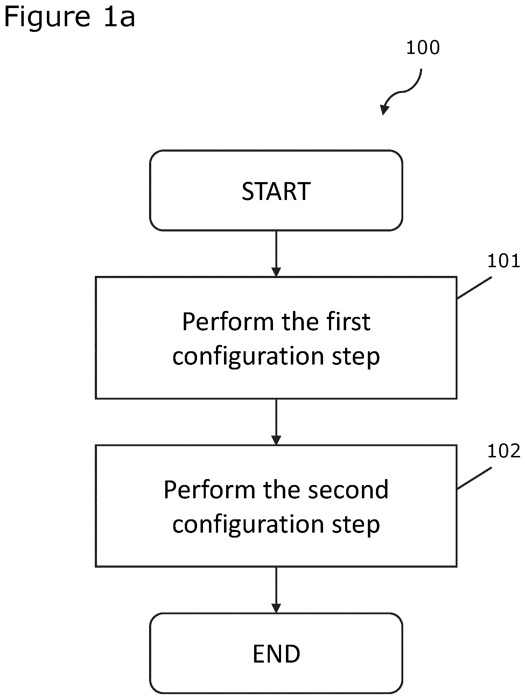

Figure 1a shows a method 100 for operating a passive RFID tag according to an embodiment of the present disclosure. The method 100 includes performing 101 a first configuration step and performing 102 a second configuration step, as described above.

The first configuration step 101 of the method 100 includes receiving configuration data from a memory device. The configuration data defines the capacitance offset from a nominal capacitance value, wherein the capacitance offset is based on the region of the wafer from which the IC was picked. The first configuration step 101 also includes setting the capacitance of the variable capacitance on the IC to an initially-configured capacitance value based on the configuration data. The nominal capacitance value may be considered to be the capacitance value of an IC which has been picked from the centre of the wafer, or from any other suitable reference position. The variable capacitance may be implemented as a variable capacitor or a bank of capacitors. As is known in the art, one or more capacitors in a bank of capacitors are connected or disconnected as required in order to adjust the total capacitance of the bank of capacitors, for example.

The memory may be any suitable memory device, such as one or more fuses configured to store the configuration data. The memory device may be read-only or read-write capable.

Therefore, the first configuration step 101 can be considered as setting the variable capacitance value based on information that has been stored in memory in advance of the first configuration step being performed (i.e., the configuration data that is stored in memory). As will be discussed below, this configuration data can be based on the location in the wafer from which the IC has been picked, and can be stored as part of an initial calibration operation before the IC is assembled in an RFID tag and located in the field.

The second configuration step 102 includes measuring input power at the IC in response to a received signal from an RFID reader for the initially configured capacitance value. The second configuration step 102 then includes setting the capacitance of the variable capacitance such that the variable capacitance has a first reconfigured capacitance value, and measuring the input power at the IC in response to the received signal from the RFID reader for the first reconfigured capacitance value. Finally, the second configuration step 102 includes setting the capacitance of the variable capacitance as one from a list containing: the initially configured capacitance value, and the first reconfigured capacitance value, based on the measured input power for each capacitance value.

In some embodiments, setting the capacitance of the variable capacitance based as one from the list based on the measured input power for each capacitance value includes setting the capacitance of the variable capacitance as the one from the list with the lowest minimum power requirement for activation of the RFID tag. In other embodiments, setting the capacitance of the variable capacitance as one from the list based on the measured input power for each capacitance value includes setting the capacitance of the variable capacitance as the one from the list with the highest measured input power.

In other words, after performing the first configuration step 101, the starting point is configured based on information stored in the memory, and after performing the second configuration step 102, the capacitance value is optimized by comparing the measured power for at least a first and a second capacitance value. If a criterion is meet, such as a minimum power required for activation being within a predefined acceptable range, then the corresponding capacitance value is selected.

In some embodiments, the second configuration step 102 also includes setting the capacitance of the variable capacitance such that the variable capacitance has one or more subsequent reconfigured capacitance values and measuring the input power at the IC in response to the received signal from the RFID reader for each of the one or more subsequent reconfigured capacitance values. In these embodiments, the list also includes the one or more subsequent reconfigured capacitance values.

In some embodiments, the variable capacitance comprises a first variable capacitance bank and a second variable capacitance bank. In these embodiments, setting the capacitance of the variable capacitance to an initially

configured capacitance value based on the configuration data in the first configuration step includes setting the capacitance of the first variable capacitance bank. In these embodiments, setting the capacitance of the variable capacitance in the second configuration step, such that the variable capacitance has a first reconfigured capacitance value, includes changing the capacitance of the second variable capacitance bank by a predetermined amount in a first direction.

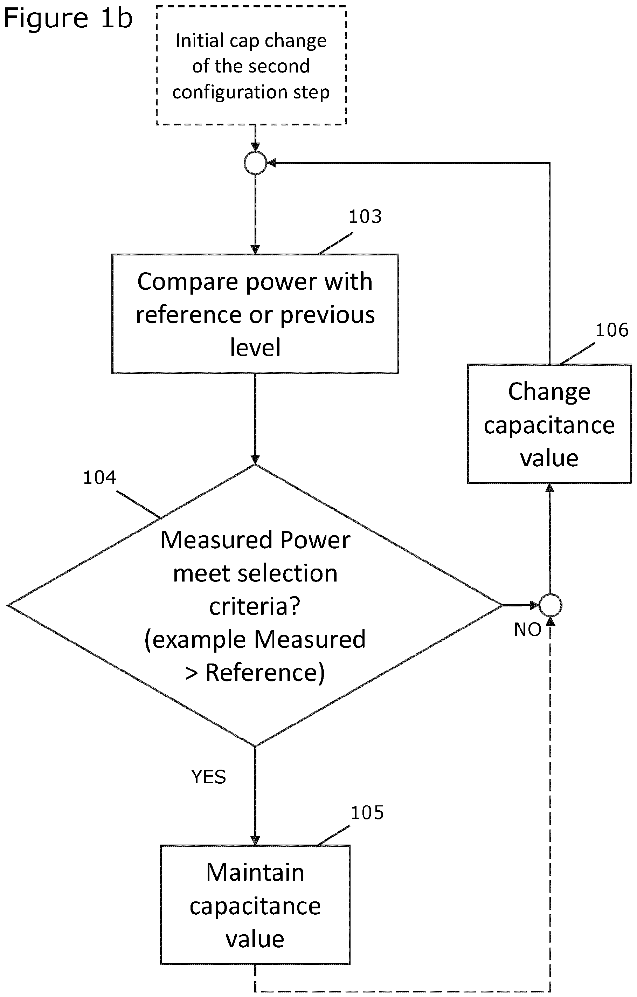

Figure 1b shows an example embodiment of the second configuration step. In this embodiment, the second configuration step includes comparing 103 the input power level for the initially configured capacitance value with the input power level for the first reconfigured capacitance value. If, at step 104, the input power level for the first reconfigured capacitance value meets a one or more selection criteria; then the second configuration step includes maintaining, at step 105, the capacitance value of the variable capacitance as the first reconfigured capacitance value. If the input power for the first reconfigured capacitance does not meet the one or more selection criteria, then the second configuration step includes changing the capacitance value to a second reconfigured capacitance value at step 106, and repeating the loop until the capacitance value meets the one or more selection criteria.

Optionally, after the capacitance value of the variable capacitance is maintained at step 105, the loop may be repeated again, in order to allow one or more additional capacitance values to be compared.

In some embodiments, the one or more selection criteria is met when the input power for the first reconfigured capacitance is greater than the input power for the initially configured capacitance value. In this embodiment, at least two different capacitance values will be checked, however it will be understood that any specific number of loop iterations is not essential.

Some specific embodiments of the second configuration step 102 will now be described wherein the input power level for the initially configured capacitance can be referred to as the initial input power level, and the input power level for the first reconfigured capacitance value can be referred to as the primary input power level.

In a first embodiment, the second configuration step 102 includes measuring input power at the IC in response to a received signal from an RFID reader as an initial input power level, and changing the capacitance of the variable capacitance by a predetermined amount in a first direction, such that the variable capacitance has a first reconfigured capacitance value. Next, the second configuration step 102 includes measuring the input power at the IC in response to the received signal from the RFID reader as a primary input power level (which is of course dependent on the reconfigured capacitance value) and comparing the primary input power level with the initial input power level. If the primary input power level is greater than the initial input power level, then the second configuration step 102 includes maintaining the capacitance value of the variable capacitance as the first reconfigured capacitance value on the basis that performance of the RFID tag is better with the reconfigured capacitance value.

If the primary input power is not greater than the initial input power level, then the second configuration step 102 can include setting the capacitance value of the variable capacitance as the initially-configured capacitance value. That is, the reconfigured capacitance value is effectively rejected because performance was better before the reconfigured capacitance value was applied.

In some embodiments, if the primary input power of the passive RFID tag is not greater than the initial input power level, then the second configuration step 102 includes changing the capacitance of the variable capacitance by the predetermined amount in a second direction, such that the variable capacitance has a second reconfigured capacitance value, wherein the second direction is opposite the first direction, and measuring the input power at the IC in response to the received signal from the RFID reader as a secondary input power level. The second configuration step 102 then includes comparing the secondary input power level with the initial input power level. If the secondary input power level is greater than the initial input power level, then the second configuration step 102 includes maintaining the capacitance value of the variable capacitance as the second reconfigured capacitance value. In a similar way to that described above, this is on the basis that performance is improved with the second reconfigured capacitance value.

In some embodiments, wherein the variable capacitance includes a first variable capacitance bank and a second variable capacitance bank, changing the capacitance of the variable capacitance by a predetermined amount in a second direction, such that the variable capacitance has a second reconfigured capacitance value, in the second configuration step includes changing the capacitance of the second variable capacitance bank by a predetermined amount in the second direction.

Similarly, if the secondary input power is not greater than the initial input power level, then the second configuration step 102 can include setting the capacitance value of the variable capacitance as the initially-configured capacitance value. In some of these embodiments, the second configuration step 102 further includes changing the capacitance of the variable capacitance by a second predetermined amount in either the first or second direction, such that the variable capacitance has a third reconfigured capacitance value, wherein the second predetermined amount is either greater than or less than the first predetermined amount. In these embodiments, the second configuration step 102 also includes measuring the input power at the IC in response to the received signal from the RFID reader as a tertiary input power level and comparing the tertiary input power level with the initial power level. If the tertiary input power level is greater than the initial input power level, then the second configuration step 102 includes maintaining the capacitance value of the variable capacitance as the third reconfigured capacitance value.

In some embodiments, wherein the variable capacitance includes a first variable capacitance bank and a second variable capacitance bank, changing the capacitance of the variable capacitance by a second predetermined amount in either the first or second direction in the second configuration step, wherein the second predetermined amount is different to the predetermined amount, comprises: changing the capacitance of the second variable capacitance bank by a second predetermined amount in either the first or second direction, such that the variable capacitance has a third reconfigured capacitance value.

In any case, after maintaining the capacitance value of the variable capacitance as the first reconfigured capacitance value or the second reconfigured capacitance value, the second configuration step 102 can include repeating the second configuration step 102 using the first reconfigured capacitance value or the second reconfigured capacitance value (or the latest of any subsequent reconfigured capacitance value) as the initially-configured capacitance value and changing the capacitance of the variable capacitance by a second (or subsequent) predetermined amount, wherein the second (or subsequent) predetermined amount is different from the first (or prior) predetermined amount(s). In this way, the above-described procedure can be repeated as many times as required.

In some embodiments, the first direction is a positive direction, such that the first reconfigured capacitance value is greater than the initially-configured capacitance value. In other embodiments, the first direction is a negative direction, such that the first reconfigured capacitance value is less than the initially-configured capacitance value.

In some embodiments, the method further includes updating the configuration data such that the configuration data defines an updated capacitance offset from the nominal capacitance, wherein the updated capacitance offset is based on the capacitance of the variable capacitance at the end of the second configuration step 102.

The method 100 of Figure 1a can be performed by a processor on a passive RFID tag in some examples.

The method 100 described above can beneficially be performed before the RFID IC becomes operational for RF communications. That is, before the power harvested by the RFID reaches a power-on-reset, POR, level. This can be achieved by the method of Figure 1a being implementable when the level of harvested power by the RFID is less that the POR that is required for the RFID tag to perform its main functionality. Therefore, when the IC becomes ready for RF communications, the first 101 and second 102 configuration steps have been completed and as such, the RFID IC can begin RF communications with improved settings for continued energy harvesting.

Therefore, in some embodiments, the first configuration step is completed before each power-on-reset, POR, of the RFID circuit. Furthermore, in some embodiments, the second configuration step is also completed before each power-on-reset, POR, of the RFID circuit. This is beneficial because the disclosed method does not impact the normal operation of the RFID tag, either by delaying RF communication or by beginning RF communication with a sub-optimal input impedance.

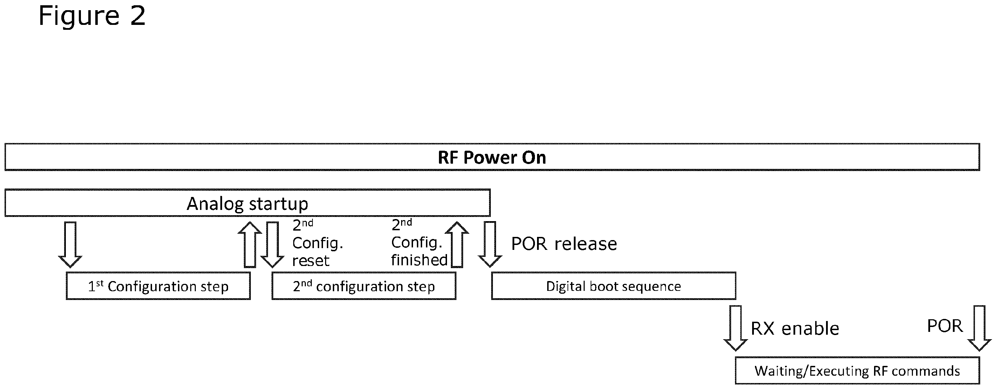

Figure 2 shows a timing diagram of the operation of an RFID tag according to an embodiment of the present disclosure, from the moment the RFID tag receives an RF signal from an RFID reader, until POR (i.e., the boot process).

Using only the first configuration step or the second configuration step in isolation of the other can lead to a number of disadvantages. By using only the first configuration step, the passive RFID tag may be unable to compensate for any additional variation changes between different production lots, backend manufacturing steps and / or environmental factors. By using only the second configuration step, the passive RFID tag may end up with an input impedance configuration which provides a better performance (when compared with a tag which has not used any configuration steps, and depending on the specific implementation of the second configuration step) but may have a larger deviation from a nominal design target. This means that the differences between performance of each RFID tag within the RFID system may be exacerbated.

The above-described method, combining the first configuration step and the second configuration step, can lead to the beneficial result that the performance of each RFID tag within an RFID system remains close to the expected performance of an RFID tag with the nominal capacitance value, wherein the individual performance of each RFID tag remains substantially stable (at or close to the expected nominal performance).

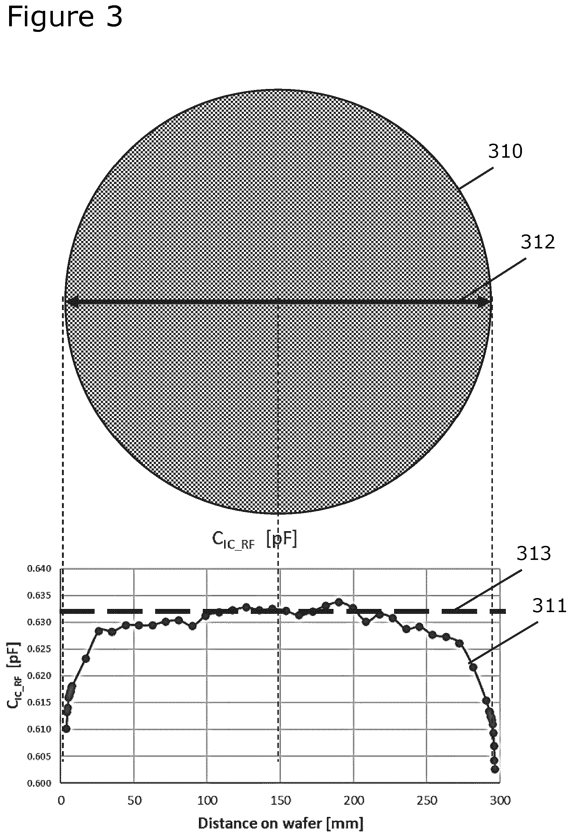

Figure 3 shows an example wafer 310 and example capacitance values 311 for ICs picked from various positions within a cross section 312 of the wafer 310.

As is apparent from the figure, the capacitance values 311 measured from ICs picked from nearer to the centre of the wafer 310 tend to be more similar to each other and may be considered to be approximately equal to (and therefore have a small offset when compared to) a nominal capacitance value 313. Contrastingly, the capacitance values 311 measured from ICs picked from nearer to the edge of the wafer 310 tend to be less similar to each other and may be considered to have an offset from the nominal capacitance value 313.

In different examples, the wafer 310 may have different capacitance profiles, such that the capacitance values 311 may vary depending on their position on the wafer 310 in a way that is different from the example shown in the figure. In this example, capacitance values 311 measured from ICs picked from nearer to the edge of the wafer 310 are lower than capacitance values 311 measured from ICs picked from nearer to the centre of the wafer 310, whereas in other examples, capacitance values 311 measured from ICs picked from nearer to the edge of the wafer 310 may be higher than capacitance values 311 measured from ICs picked from nearer to the centre of the wafer 310.

In any case, the capacitance offset is based on the region of the wafer 310 from which the IC was picked. In this example, the capacitance offset generally increases non-linearly with distance from the centre of the wafer 310. These offsets result from intrinsic effects of the wafer manufacturing process, and therefore cannot be directly controlled.

As explained above, the capacitance of an IC directly affects the input impedance of the IC, and therefore two different RFID IC which have been picked from different positions on the wafer (such as one from near to the centre and another from near to the wafer edge) can present a significant variation in performance.

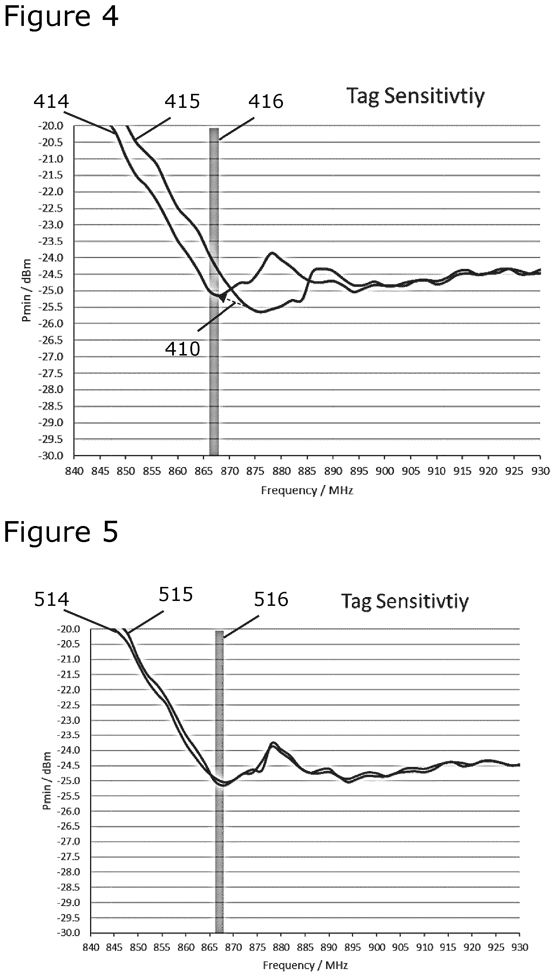

Figure 4 shows example plots of the minimum input power required to activate two RFID ICs at different frequencies. In the figure, a first plot 414 is shown which corresponds to an RFID IC which was picked from near to the centre of the wafer, and a second plot 415 is shown which corresponds to an RFID IC which was picked from near to the edge of the wafer. A highlighted region 416 shows a frequency band of interest (between 866 and 868 MHz), for example the frequency band which is used by an RFID reader within the RFID system that the RFID ICs are intended to be used within.

As is apparent from the figure, the first plot 414 and the second plot 415 are dissimilar, including within the highlighted frequency band 416. This difference represents the performance variation between RFID ICs and their corresponding tags, and therefore reducing this deviation is considered advantageous, for example by using the method disclosed above.

Figure 5 shows example plots of the minimum input power required to activate the same two RFID ICs at different frequencies, after applying the method of Figure 1a. Similarly to Figure 4, a first plot 514 is shown which corresponds to the RFID IC which was picked from near to the centre of the wafer, and a second plot 515 is shown which corresponds to the RFID IC which was picked from near to the edge of the wafer.

As is apparent from the figure, the first plot 514 and the second plot 515 are similar, including within the highlighted frequency band 516 of interest. Therefore, the performance variation of the two RFID tags is likely to be very limited, such that the tags are able to respond as expected.

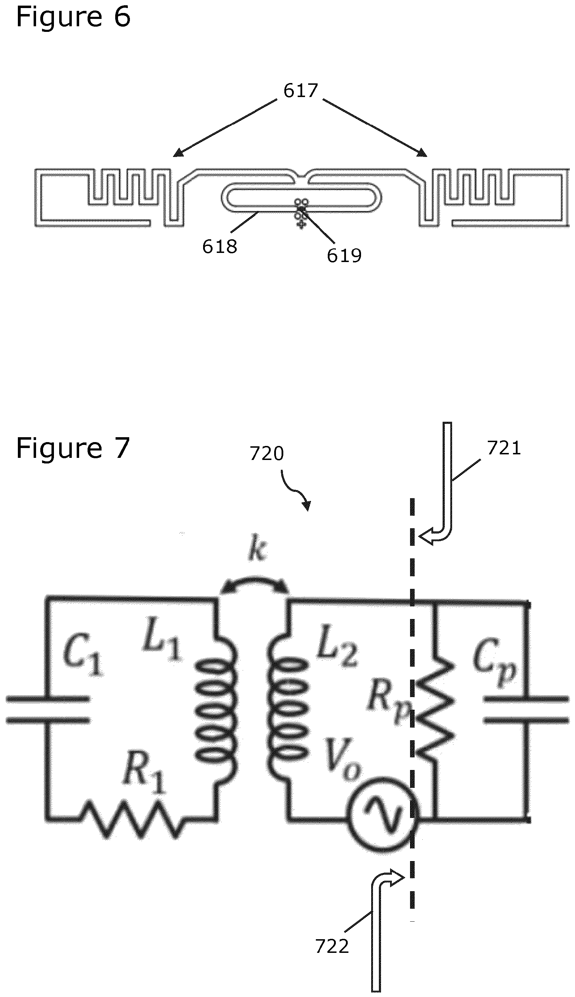

Figure 6 shows an example passive RFID tag that may be in accordance with embodiments of the present disclosure. The example passive RFID tag is a T-matched dipole tag, which is commonly used within UHF RFID applications, although it will be appreciated that other types of passive RFID tag may be suitable. The RFID tag of Figure 6 includes a dipole antenna 617, a loop 618 and an IC 619. The loop 618 is coupled to the dipole antenna 617, and the IC 619 is connected directly to the loop 618.

Figure 7 shows a typical equivalent passive RFID IC system circuital model 720. The RFID IC circuital model 720 includes a resistance-impedance-capacitance (RLC) series R1, L1, C1, which represents the dipole antenna, and an RLC parallel Rp, L2, Cp which represents the loop which is loaded with the RFID IC.

The arrows 721 and 722 represent the antenna impedance Za and the IC impedance Zc respectively. The resistivity $\rho_c$ of the IC is represented by equation (1) below.

$$\rho_c = \frac{Z_c - Z_a^*}{Z_c + Z_a} \qquad (1)$$

Consequently, the best power matching condition of the IC occurs when the IC impedance Zc is equal to the complex conjugate of the antenna impedance Za (that is, $Z_c = Z_a^*$).

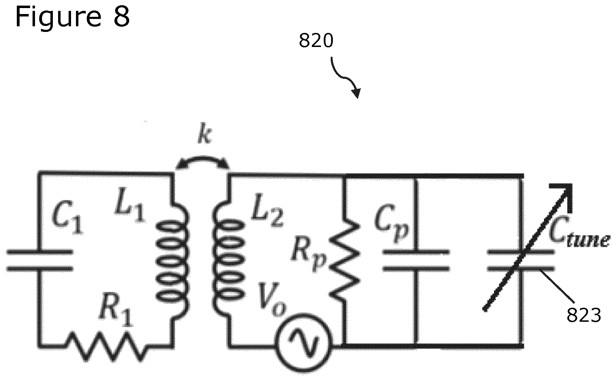

Figure 8 shows a passive RFID IC system circuital model 820 of a passive RFID tag according to an embodiment of the present disclosure. As discussed above, the RFID tag includes a variable capacitance, which is represented by the variable capacitor 823 in the figure.

The physical characteristics of the antenna may vary due to boundary condition changes (for example when the tag is attached to some paper). This change is reflected in the equivalent RLC of the antenna, and the coupled inductance of the IC (that is, R1, L1, C1 and L2). This variation can then lead to the variation of input impedance and therefore the variation of performance discussed above. By adjusting the variable capacitance 823 as discussed in relation to the method of Figure 1, the overall impedances of the IC relative to that of the antenna can be adjusted in order to better meet the optimal power matching condition according to equation (1) above.

Therefore, advantageously, by using the method discussed above, performance variations resulting from both process irregularities and boundary condition changes may be accounted for.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1.   A method for operating a passive radio-frequency identification, RFID, tag, the passive RFID tag comprising:

   an integrated circuit, IC, wherein the IC was picked from a region of a wafer, and wherein an integrated capacitance value of the IC is based on the region of the wafer from which the IC was picked, the IC comprising a variable capacitance; and
   a memory device;

   the method comprising:

   a first configuration step comprising:

      receiving configuration data from the memory device, wherein the configuration data defines a capacitance offset from a nominal capacitance value, wherein the capacitance offset is based on the region of the wafer from which the IC was picked; and
      setting the capacitance of the variable capacitance to an initially configured capacitance value based on the configuration data; and

   a second configuration step comprising:

      measuring input power at the IC in response to a received signal from an RFID reader for the initially configured capacitance value;
      setting the capacitance of the variable capacitance, such that the variable capacitance has a first reconfigured capacitance value;
      measuring the input power at the IC in response to the received signal from the RFID reader for the first reconfigured capacitance value; and
      setting the capacitance of the variable capacitance as one from a list containing:

         the initially configured capacitance value, and

the first reconfigured capacitance value,

based on the measured input power for each capacitance value.

2. The method of claim 1, wherein:

the second configuration step further comprises:

setting the capacitance of the variable capacitance, such that the variable capacitance has one or more subsequent reconfigured capacitance values;
measuring the input power at the IC in response to the received signal from the RFID reader for each of the one or more subsequent reconfigured capacitance values; and

the list further comprises:
the one or more subsequent reconfigured capacitance values.

3. The method of claim 1, wherein:

setting the capacitance of the variable capacitance, such that the variable capacitance has a first reconfigured capacitance value comprises:
changing the capacitance of the variable capacitance by a predetermined amount in a first direction; and
setting the capacitance of the variable capacitance as one of: the initially configured capacitance value, and the first reconfigured capacitance value, based on the measured input power for each capacitance value comprises:

comparing the input power level for the initially configured capacitance value with the input power level for the first reconfigured capacitance value;
if the input power level for the first reconfigured capacitance value is greater than the input power level for the initially configured capacitance value; then
maintaining the capacitance value of the variable capacitance as the first reconfigured capacitance value.

4. The method of claim 3, wherein setting the capacitance of the variable capacitance as one of: the initially configured capacitance value, and the first reconfigured capacitance value, based on the measured input power for each capacitance value further comprises:
if the input power for the first reconfigured capacitance is not greater than the input power level for the initially configured capacitance; then
setting the capacitance value of the variable capacitance as the initially configured capacitance value.

5. The method of claim 3, wherein the second configuration step further comprises:
if the input power for the first reconfigured capacitance value is not greater than the input power level for the initially configured capacitance value; then

changing the capacitance of the variable capacitance by the predetermined amount in a second direction, such that the variable capacitance has a second reconfigured capacitance value, wherein the second direction is opposite the first direction;
measuring the input power at the IC in response to the received signal from the RFID reader for the second reconfigured capacitance value;
setting the capacitance of the variable capacitance as one of: the initially configured capacitance value, and the second reconfigured capacitance value, based on the measured input power for each capacitance value.

6. The method of claim 5, wherein setting the capacitance of the variable capacitance as one of: the initially configured capacitance value, and the second reconfigured capacitance value, based on the measured input power for each capacitance value comprises:

comparing the input power level for the second reconfigured capacitance value with the input power level for the initially configured capacitance value;
if the input power level for the second reconfigured capacitance value is greater than the input power level for the initially configured capacitance value; then
maintaining the capacitance value of the variable capacitance as the second reconfigured capacitance value.

7. The method of claim 6, wherein setting the capacitance of the variable capacitance as one of: the initially configured capacitance value, and the second reconfigured capacitance value, based on the measured input power for each capacitance value further comprises:
if the input power level for the second reconfigured capacitance is not greater than the input power level for the initially configured capacitance; then
setting the capacitance value of the variable capacitance as the initially configured capacitance value.

8. The method of any of claims 3 to 7, wherein, after maintaining the capacitance value of the variable capacitance as the first reconfigured capacitance value, the method further comprises:
repeating the second configuration step using the first reconfigured capacitance value as the initially configured capacitance value.

9. The method of claim 6 or 7, wherein, after maintaining the capacitance value of the variable capacitance as the second reconfigured capacitance value, the method further comprises:
repeating the second configuration step, wherein the initially configured capacitance value is the second reconfigured capacitance value, and wherein repeating the second configuration step comprises changing the capacitance of the variable capacitance by a second predetermined amount in either the first or second direction, wherein the second predetermined amount is different to the predetermined amount.

10. The method of any preceding claim, wherein the first direction is a positive direction, such that the first reconfigured capacitance value is greater than the initially configured capacitance value.

11. The method of any preceding claim, wherein the second configuration step is completed before each power-on-reset, POR, of the RFID circuit.

12. The method of any preceding claim, wherein the method further comprises:
updating the configuration data such that the configuration data defines an updated capacitance offset from the nominal capacitance, wherein the capacitance offset is based on the capacitance of the variable capacitance at the end of the second configuration step.

13. The method of any preceding claim, wherein:

the variable capacitance comprises a first variable capacitance bank and a second variable capacitance bank;
setting the capacitance of the variable capacitance to an initially configured capacitance value based on the configuration data comprises: setting the capacitance of the first variable capacitance bank; and
setting the capacitance of the variable capacitance, such that the variable capacitance has a first reconfigured capacitance value comprises: changing the capacitance of the second variable capacitance bank by a predetermined amount in a first direction.

14. A passive radio-frequency identification, RFID, tag comprising:

an integrated circuit, IC, wherein the IC was picked from a region of a wafer, and wherein an integrated capacitance value of the IC is based on the region of the wafer from which the IC was picked, the IC comprising a variable capacitance; and
a memory device; and
a processor, wherein the processor is configured to:

perform a first configuration step, wherein the processor is configured to:

receive configuration data from the memory device, wherein the configuration data defines a capacitance offset from a nominal capacitance value, wherein the capacitance offset is based on the region of the wafer from which the IC was picked;
set the capacitance of the variable capacitance to an initially-configured capacitance value based on the configuration data; and

perform a second configuration step, wherein the processor is configured to:

measure input power at the IC in response to a received signal from an RFID reader for the initially configured capacitance value;

set the capacitance of the variable capacitance, such that the variable capacitance has a first reconfigured capacitance value;

measure the input power at the IC in response to the received signal from the RFID reader for the first reconfigured capacitance value; and

set the capacitance of the variable capacitance as one from a list containing:

the initially configured capacitance value, and
the first reconfigured capacitance value,

based on the measured input power for each capacitance value.

15. The passive RFID tag of claim 14, wherein the memory device comprises one or more fuses configured to store the configuration data.

**Amended claims in accordance with Rule 137(2) EPC.**

1. A method for operating a passive radio-frequency identification, RFID, tag, the passive RFID tag comprising:

an integrated circuit, IC, wherein the IC was picked from a region of a wafer, and wherein an integrated capacitance value of the IC is based on the region of the wafer from which the IC was picked, the IC comprising a variable capacitance (Ctune, Cp) and a memory device;

the method comprising:

a first configuration step (101) comprising:

receiving configuration data from the memory device, wherein the configuration data defines a capacitance offset from a nominal capacitance value, wherein the capacitance offset is based on the region of the wafer from which the IC was picked; and
setting the capacitance of the variable capacitance to an initially configured capacitance value based on the configuration data; and

a second configuration step (102) comprising:

measuring input power at the IC in response to a received signal from an RFID reader for the initially configured capacitance value;
setting the capacitance of the variable capacitance, such that the variable capacitance has a first reconfigured capacitance value;
measuring the input power at the IC in response to the received signal from the RFID reader for the first reconfigured capacitance value; and
setting the capacitance of the variable capacitance as one from a list containing:

the initially configured capacitance value, and
the first reconfigured capacitance value,

based on the measured input power for each capacitance value.

2. The method of claim 1, wherein:

the second configuration step further comprises:

setting the capacitance of the variable capacitance, such that the variable capacitance has one or more subsequent reconfigured capacitance values;
measuring the input power at the IC in response to the received signal from the RFID reader for each of the one or more subsequent reconfigured capacitance values; and

the list further comprises:
the one or more subsequent reconfigured capacitance values.

3. The method of claim 1, wherein:

setting the capacitance of the variable capacitance, such that the variable capacitance has a first reconfigured capacitance value comprises:
changing the capacitance of the variable capacitance by a predetermined amount in a first direction; and
setting the capacitance of the variable capacitance as one of: the initially configured capacitance value, and the first reconfigured capacitance value, based on the measured input power for each capacitance value comprises:

comparing the input power level for the initially configured capacitance value with the input power level for the first reconfigured capacitance value;
if the input power level for the first reconfigured capacitance value is greater than the input power level for the initially configured capacitance value; then
maintaining the capacitance value of the variable capacitance as the first reconfigured capacitance value.

4. The method of claim 3, wherein setting the capacitance of the variable capacitance as one of: the initially configured capacitance value, and the first reconfigured capacitance value, based on the measured input power for each capacitance value further comprises:
if the input power for the first reconfigured capacitance is not greater than the input power level for the initially configured capacitance; then
setting the capacitance value of the variable capacitance as the initially configured capacitance value.

5. The method of claim 3, wherein the second configuration step further comprises:
if the input power for the first reconfigured capacitance value is not greater than the input power level for the initially configured capacitance value; then

changing the capacitance of the variable capacitance by the predetermined amount in a second direction, such that the variable capacitance has a second reconfigured capacitance value, wherein the second direction is opposite the first direction;
measuring the input power at the IC in response to the received signal from the RFID reader for the second reconfigured capacitance value;
setting the capacitance of the variable capacitance as one of: the initially configured capacitance value, and the second reconfigured capacitance value, based on the measured input power for each capacitance value.

6. The method of claim 5, wherein setting the capacitance of the variable capacitance as one of: the initially configured capacitance value, and the second reconfigured capacitance value, based on the measured input power for each capacitance value comprises:

comparing the input power level for the second reconfigured capacitance value with the input power level for the initially configured capacitance value;
if the input power level for the second reconfigured capacitance value is greater than the input power level for the initially configured capacitance value; then
maintaining the capacitance value of the variable capacitance as the second reconfigured capacitance value.

7. The method of claim 6, wherein setting the capacitance of the variable capacitance as one of: the initially configured capacitance value, and the second reconfigured capacitance value, based on the measured input power for each capacitance value further comprises:
if the input power level for the second reconfigured capacitance is not greater than the input power level for the initially configured capacitance; then
setting the capacitance value of the variable capacitance as the initially configured capacitance value.

8. The method of any of claims 3 to 7, wherein, after maintaining the capacitance value of the variable capacitance as the first reconfigured capacitance value, the method further comprises:
repeating the second configuration step using the first reconfigured capacitance value as the initially configured capacitance value.

9.  The method of claim 6 or 7, wherein, after maintaining the capacitance value of the variable capacitance as the second reconfigured capacitance value, the method further comprises:
    repeating the second configuration step, wherein the initially configured capacitance value is the second reconfigured capacitance value, and wherein repeating the second configuration step comprises changing the capacitance of the variable capacitance by a second predetermined amount in either the first or second direction, wherein the second predetermined amount is different to the predetermined amount.

10. The method of claim 3, or any of claims 4 to 9 when depending therefrom, wherein the first direction is a positive direction, such that the first reconfigured capacitance value is greater than the initially configured capacitance value.

11. The method of any preceding claim, wherein the second configuration step is completed before each power-on-reset, POR, of the RFID circuit.

12. The method of any preceding claim, wherein the method further comprises:
    updating the configuration data such that the configuration data defines an updated capacitance offset from the nominal capacitance, wherein the capacitance offset is based on the capacitance of the variable capacitance at the end of the second configuration step.

13. The method of any preceding claim, wherein:

    the variable capacitance comprises a first variable capacitance bank and a second variable capacitance bank;
    setting the capacitance of the variable capacitance to an initially configured capacitance value based on the configuration data comprises: setting the capacitance of the first variable capacitance bank; and
    setting the capacitance of the variable capacitance, such that the variable capacitance has a first reconfigured capacitance value comprises: changing the capacitance of the second variable capacitance bank by a predetermined amount in a first direction.

14. A passive radio-frequency identification, RFID, tag comprising:

    an integrated circuit, IC, wherein the IC was picked from a region of a wafer, and wherein an integrated capacitance value of the IC is based on the region of the wafer from which the IC was picked, the IC comprising
    a variable capacitance (Ctune, Cp); and
    a memory device; and
    a processor, wherein the processor is configured to:

       perform a first configuration step, wherein the processor is configured to:

          receive configuration data from the memory device, wherein the configuration data defines a capacitance offset from a nominal capacitance value, wherein the capacitance offset is based on the region of the wafer from which the IC was picked;
          set the capacitance of the variable capacitance to an initially-configured capacitance value based on the configuration data; and

       perform a second configuration step, wherein the processor is configured to:

          measure input power at the IC in response to a received signal from an RFID reader for the initially configured capacitance value;
          set the capacitance of the variable capacitance, such that the variable capacitance has a first reconfigured capacitance value;
          measure the input power at the IC in response to the received signal from the RFID reader for the first reconfigured capacitance value; and
          set the capacitance of the variable capacitance as one from a list containing:

             the initially configured capacitance value, and
             the first reconfigured capacitance value,

          based on the measured input power for each capacitance value.

**15.** The passive RFID tag of claim 14, wherein the memory device comprises one or more fuses configured to store the configuration data.

# Figure 1a

100

```
┌─────────────────────┐
│        START        │
└─────────────────────┘
           │
           ▼
┌─────────────────────┐ 101
│   Perform the first │
│ configuration step  │
└─────────────────────┘
           │
           ▼
┌─────────────────────┐ 102
│  Perform the second │
│ configuration step  │
└─────────────────────┘
           │
           ▼
┌─────────────────────┐
│         END         │
└─────────────────────┘
```

Figure 1b

# Figure 2

RF Power On

Analog startup

1st Configuration step

2nd Config. reset

2nd Config. finished

2nd configuration step

POR release

Digital boot sequence

RX enable

Waiting/Executing RF commands

POR

EP 4 783 065 A1

# Figure 3

# Figure 4

414    415    416    Tag Sensitivity

# Figure 5

514    515    516    Tag Sensitivity

# Figure 6

# Figure 7

Figure 8

## EUROPEAN SEARCH REPORT

**Application Number**

EP 25 15 4089

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 170 695 A1 (TEXAS INSTRUMENTS DEUTSCHLAND [DE]) 9 January 2002 (2002-01-09) | 1,2, 11-14 | INV. G06K19/07 G06K19/077 |
| Y | * abstract * | 15 | |
| A | * paragraph [0002] - paragraph [0011] * * figures 1-6 * * claims 1-11 * | 3-10 | |
| X | US 6 133 834 A (EBERTH GERHARD [DE] ET AL) 17 October 2000 (2000-10-17) | 1,2, 11-14 | |
| A | * the whole document * | 3-10 | |
| Y | US 2009/224055 A1 (MIO HANNES [DE] ET AL) 10 September 2009 (2009-09-10) * paragraph [0004] * | 15 | |
| A | WO 2005/004044 A1 (SONY CHEMICALS CORP [JP]; ORIHARA KATSUHISA [JP]) 13 January 2005 (2005-01-13) * abstract * * figure 4 * | 1-15 | |
| | | | TECHNICAL FIELDS SEARCHED (IPC) |
| A | EP 2 182 472 A1 (FUJITSU LTD [JP]) 5 May 2010 (2010-05-05) * paragraph [0034] * * figure 9A * | 1,14 | G06K |

The present search report has been drawn up for all claims

| Place of search | Date of completion of the search | Examiner |
|---|---|---|
| Munich | 9 July 2025 | Bhalodia, Anil |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 25 15 4089

This annex lists the patent family members relating to the patent documents cited in the above-mentioned European search report.
The members are as contained in the European Patent Office EDP file on
The European Patent Office is in no way liable for these particulars which are merely given for the purpose of information.

09-07-2025

| Patent document cited in search report | | Publication date | Patent family member(s) | | Publication date |
|---|---|---|---|---|---|
| EP 1170695 | A1 | 09-01-2002 | AT | E416437 T1 | 15-12-2008 |
| | | | EP | 1170695 A1 | 09-01-2002 |
| US 6133834 | A | 17-10-2000 | NONE | | |
| US 2009224055 | A1 | 10-09-2009 | DE | 102009011304 A1 | 10-09-2009 |
| | | | US | 2009224055 A1 | 10-09-2009 |
| WO 2005004044 | A1 | 13-01-2005 | JP | 4102994 B2 | 18-06-2008 |
| | | | JP | 2005033587 A | 03-02-2005 |
| | | | TW | I358669 B | 21-02-2012 |
| | | | WO | 2005004044 A1 | 13-01-2005 |
| EP 2182472 | A1 | 05-05-2010 | CN | 101739587 A | 16-06-2010 |
| | | | EP | 2182472 A1 | 05-05-2010 |
| | | | JP | 5146265 B2 | 20-02-2013 |
| | | | JP | 2010114526 A | 20-05-2010 |
| | | | KR | 20100050401 A | 13-05-2010 |
| | | | TW | 201019234 A | 16-05-2010 |
| | | | US | 2010108770 A1 | 06-05-2010 |

EPO FORM P0459

For more details about this annex : see Official Journal of the European Patent Office, No. 12/82